Europäisches Patentamt

European Patent Office

Office européen des brevets

(11) Veröffentlichungsnummer : **0 147 617**
B1

(12) **EUROPÄISCHE PATENTSCHRIFT**

(45) Veröffentlichungstag der Patentschrift :
28.09.88

(21) Anmeldenummer : 84114012.2

(22) Anmeldetag : 20.11.84

(51) Int. Cl.⁴ : **B 01 J 8/38**, B 01 J 20/34,
C 01 B 31/08

(54) Vorrichtung zum thermischen Regenerieren von trockenen, pulverförmigen beladenen kohlenstoffhaltigen Adsorptionsmitteln und Verfahren zum thermischen Regenerieren mit dieser Vorrichtung.

(30) Priorität : 07.12.83 DE 3344228

(43) Veröffentlichungstag der Anmeldung :
10.07.85 Patentblatt 85/28

(45) Bekanntmachung des Hinweises auf die Patenterteilung : 28.09.88 Patentblatt 88/39

(84) Benannte Vertragsstaaten :
AT BE CH DE FR IT LI NL SE

(56) Entgegenhaltungen :
EP-A- 0 076 457
GB-A- 600 796
US-A- 2 445 328
US-A- 2 488 406
US-A- 3 904 549

(73) Patentinhaber : Bergwerksverband GmbH
Franz-Fischer-Weg 61
D-4300 Essen 13 (DE)

(72) Erfinder : Schulz, Peter, Dipl.-Ing.
Friedrichswall 19
D-4300 Essen 14 (DE)
Erfinder : Klein, Jürgen, Dr. Dipl.-Phys.
Hülscherfeld 22
D-4300 Essen 14 (DE)
Erfinder : Vaupel, Knut, Dipl.-Ing.
Dreigarbenfeld 19
D-4300 Essen (DE)

## Beschreibung

Die Erfindung betrifft eine Vorrichtung zum thermischen Regenerieren von trockenen, pulverförmigen, beladenen, kohlenstoffhaltigen Adsorptionsmitteln gemäß dem Oberbegriff des Hauptanspruchs sowie das Verfahren zum thermischen Regenerieren mit dieser Vorrichtung.

Die thermische Regenerierung von beladenen kohlenstoffhaltigen Adsorptionsmitteln, insbesondere von Aktivkohlen, wird im allgemeinen in Etagen- oder Drehrohröfen durchgeführt, wobei das Adsorptionsmittel den Regenerationsofen kontinuierlich durchläuft. Neben einer schonenden Behandlung der Aktivkohle müssen die Regenieröfen einen guten Wärme- und Stoffaustausch sowie ein enges Verweilzeitspektrum ermöglichen. Eine wesentliche Verbesserung des bei Etagen- oder Drehrohröfen zu erreichenden Wärme- und Stoffübergangs ist durch die Verwendung eines Wirbelschichtofens möglich. Diese werden bereits großtechnisch zur Regenerierung von mit Abwasserinhaltsstoffen beladenen Aktivkohlen eingesetzt.

Es ist bereits ein Verfahren zur Regenerierung und Rückgewinnung verbrauchter, pulvriger Aktivkohle unter Zersetzung und Vergasung von Schlamm, der bei der Abwasserbehandlung unter Verwendung von Aktivkohle zur Adsorption der Verunreinigungen anfällt, bekannt, bei dem der Schlamm in eine pulvrige Form gebracht und das Schlammpulver in einem Regenierofen mit Verbrennungsabgasen, die die auf der Aktivkohle adsorbierten organischen Verbindungen selektiv thermisch zersetzen und vergasen, während die verbrauchte Aktivkohle regeneriert wird, heftig aufgewirbelt und die regenerierte Aktivkohle zurückgewonnen wird (DE-OS 26 14 012). Dieses Verfahren lehrt zwar die Abtrennung und Regenerierung verbrauchter Aktivkohle aus bei der Abwassereinigung anfallendem Schlamm, jedoch wird die Adsorptionsfähigkeit der frischen Aktivkohle, vor allem beim Einsatz in chemischen Industrieabwässern, nicht hinreichend genug wiedergewonnen.

Es ist weiterhin aus der EP-A 0 076 457 bereits das eingangs genannte gattungsgemäße Verfahren zur Regenerierung und Rückgewinnung verbrauchter, pulvriger Aktivkohle, die bei der biologischen Abwasserbehandlung unter Verwendung von Aktivkohle zur Adsorption der Verunreinigungen anfällt, bekannt, bei dem das Gemisch aus Wasser, Biomasse und pulverförmiger beladener Aktivkohle in einem mit Quarzsand betriebenen Wirbelschichtreaktor getrocknet wird. In einem zweiten mit Quarzsand betriebenen Wirbelschichtreaktor wird die getrocknete pulverförmige Aktivkohle unter Zersetzung und Vergasung der Biomasse regeneriert. Dabei wird die zu regenerierende Aktivkohle nach oben durch die Wirbelschicht geführt und oberhalb der Wirbelschicht mit dem Wirbelgas abgeführt sowie in einem nachgeschalteten Feststoffabscheider vom Wirbelgas getrennt. Bei diesem Verfahren wird jedoch die Adsorptionsfähigkeit der frischen Aktivkohle, vor allem beim Einsatz in chemischen Industrieabwässern, nicht hinreichend genug wiedergewonnen, da die Verweilzeit der zu regenerierenden pulverförmigen Aktivkohle in der Wirbelschicht zu gering ist.

Es ist daher die Aufgabe der Erfindung, bei einer Vorrichtung der eingangs genannten Art die thermische Behandlung von pulverförmigen, beladenen, kohlenstoffhaltigen Adsorptionsmitteln unter Vermeidung der Nachteile der bekannten Vorrichtungen so zu verbessern, daß bei der Regenerierung die Schadstoffe von dem Adsorptionsmittel vollständig abgetrennt werden, während gleichzeitig die Adsorptionsfähigkeit der frischen Adsorptionsmittel wiedergewonnen und der Verlust an Adsorptionsmittel möglichst niedrig gehalten wird. Eine weitere Aufgabe der Erfindung betrifft die Ausgestaltung eines Verfahrens zum thermischen Regenerieren von trockenen, pulverförmigen, beladenen, kohlenstoffhaltigen Adsorptionsmitteln unter Einbezug einer solchen Vorrichtung.

Die Aufgabe wird bei einer Vorrichtung der gattungsgemäßen Art durch die kennzeichnenden Merkmale des Anspruchs 1 gelöst und in bezug auf ein Verfahren zum thermischen Regenerieren mit dieser Vorrichtung durch die kennzeichnenden Merkmale des Anspruchs 5 gelöst. Weitere Ausbildungen der erfindungsgemäßen Vorrichtung, insbesondere bezüglich der in der Sandwirbelschicht angeordneten Einbausysteme, werden durch die Merkmale der Unteransprüche 2 bis 4 gelöst. Weitere wesentliche Vorteile der erfindungsgemäßen Regenerierung ergeben sich bei der Anwendung eines Regenerierverfahrens mit den Merkmalen der Unteransprüche 6 bis 10 in dieser Vorrichtung.

Die Vorteile der Erfindung bestehen insbesondere in einer mehr als der 10-fachen Verweilzeit der Feststoffe in der Wirbelschicht während der Regenerierung. Hierbei tritt kein Versintern oder Agglomerieren des behandelten Feststoffes ein, wie es beispielsweise bei Drehrohröfen oder Bandreaktoren möglich ist. Außerdem resultiert durch Abgasrückführung eine erheblich geringere effektive Abgasmenge. Im Gegensatz zu Drehrohröfen oder Bandreaktoren besitzt die erfindungsgemäße Vorrichtung keine beweglichen Teile.

Weitere Ziele, Merkmale, Vorteile und Anwendungsmöglichkeiten der vorliegenden Erfindung werden nachfolgend in der Beschreibung eines Ausführungsbeispiels anhand der beiliegenden Zeichnung behandelt. Es zeigen :

Figur 1 Einzelheiten der für einen Wirbelschichtreaktor vorgesehenen Einbausysteme,

Figur 2 einen Wirbelschichtreaktor, bei dem die Einbausysteme in einer Parallelschaltung betrieben werden und

Figur 3 einen Wirbelschichtreaktor, bei dem die Einbausysteme in einer Reihenschaltung betrieben werden.

Hieran schließen sich die ursprünglichen Seiten 9 bis 16 in neuer Zählung 4 bis 11 an.

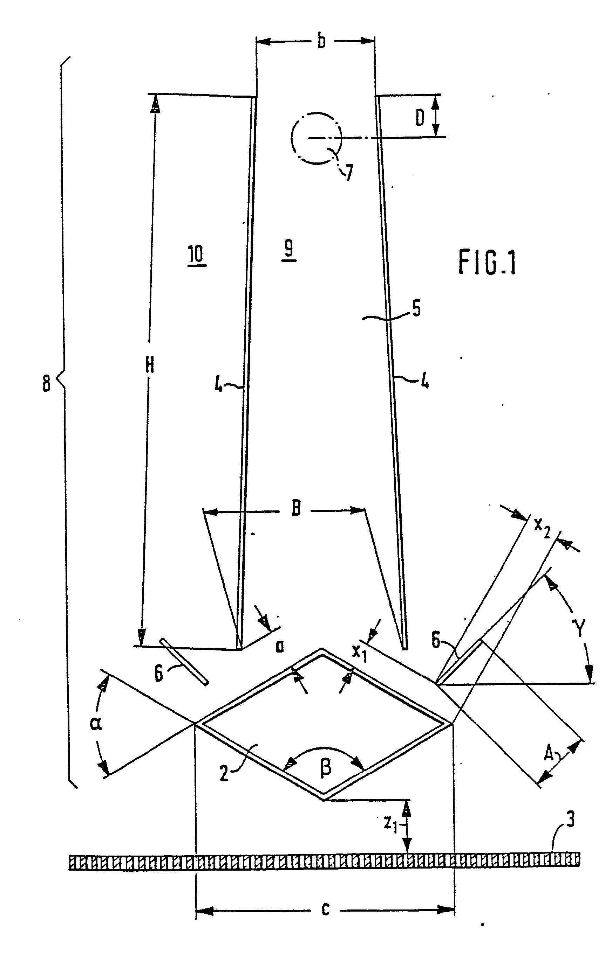

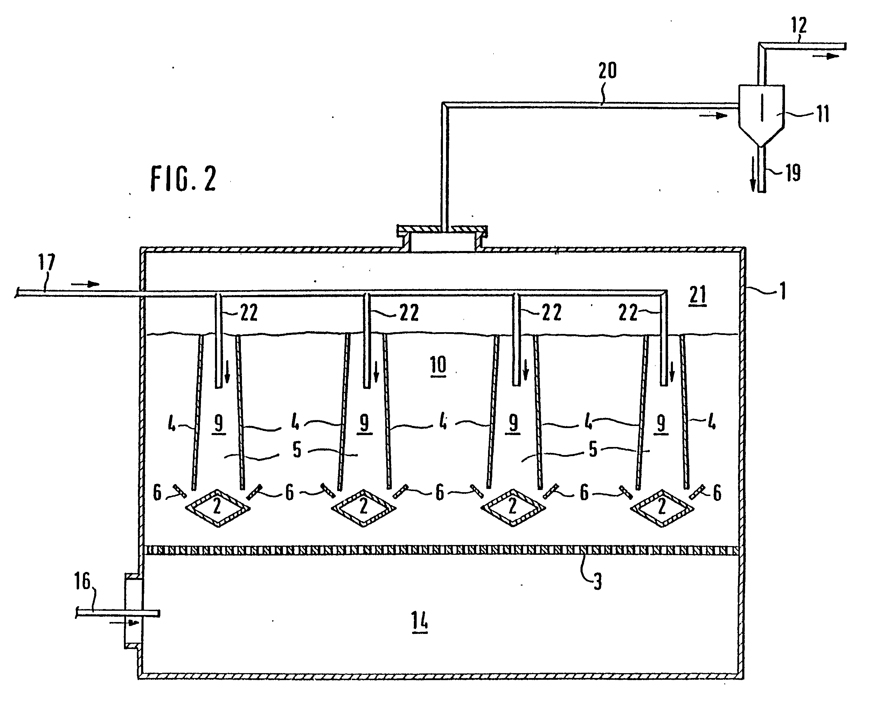

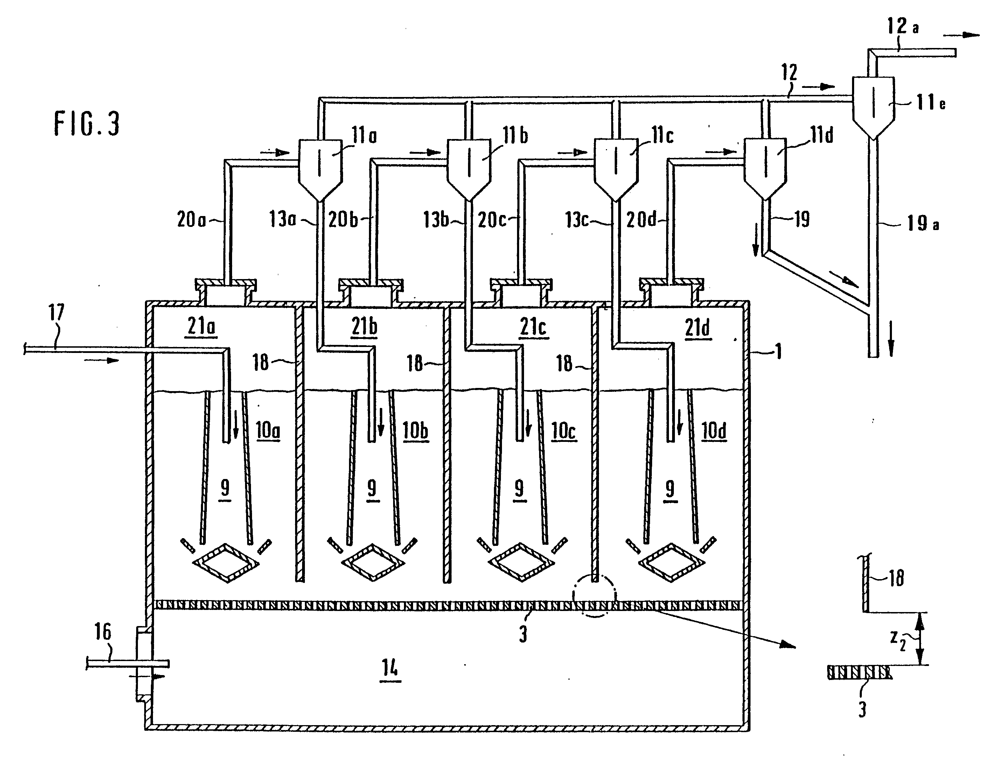

In der Fig. 1 ist ein Schacht 5 abgebildet, der von Trennwänden 4 gebildet wird, die so angeordnet sind, daß der Schacht 5 eine konische Ausgestaltung erhält. Die Höhe H des Schachtes 5 ist so gehalten, daß der Schacht 5 mit seinem Eintritt b in Höhe der Oberfläche einer Sandwirbelschicht 10 eines Wirbelschichtreaktors 1 (Fig. 2 und 3) liegt. Unterhalb des Schachtaustritts B ist ein trapezförmiges Leitsegment 2 angeordnet, dessen Breite c größer ist als der Schachtaustritt B. Der Querschnitt des Leitsegmentes ist ein Rhombus, dessen Winkel $\alpha$ kleiner ist als der Winkel $\beta$. Vorzugsweise beträgt der Winkel $\alpha$ 60° und der Winkel $\beta$ 120°.

Das Leitsegment 2 ist im Abstand $z_1$ von einem Anströmboden 3 angeordnet. Zwischen dem Leitsegment 2 und den darüber angeordneten Trennwänden 4 des Schachtes 5 ist jeweils ein Spalt a als Durchgang belassen.

Seitlich unterhalb der Trennwände 4 und gleichzeitig seitlich oberhalb des Leitsegmentes 2 sind zwei Gasleitbleche 6 positioniert, die eine Höhe A haben. Ihre Unterkante ist im Abstand $x_1$ von der oberen Leitsegmentfläche angeordnet und im Abstand von $x_2$ von der seitlichen Spitze des Leitsegmentes 2. Die Neigung des Gasleitbleches 6 zur Horizontalen ist durch den Winkel $\gamma$ bestimmt, er beträgt vorzugsweise 45°.

Unterhalb des Schachteintritts b ist eine Aufgabestelle 7 vorgesehen, deren Mittenabstand bis zur Schachtoberkante das Maß D hat.

Der Schacht 5 dient dazu, daß sich in ihm ein Fließbett 9 bildet, das einen guten Feststoffeintrag in die Sandwirbelschicht 10 erlaubt. Die vorgeschriebenen Einbauten gewährleisten dies, wie in dem späteren Beispiel noch zu erläutern sein wird, in hervorragender Weise.

In der Fig. 2 ist der bereits erwähnte Wirbelschichtreaktor 1 abgebildet, in dem eine Gasverteilungskammer 14 unterhalb des bereits angeführten Anströmbodens 3 enthalten ist, in die über eine Wirbelgasleitung 16 das Wirbelgas aufgegeben wird. Oberhalb des Anströmbodens 3 liegt eine Wirbelkammer 21, in der sich die Sandwirbelschicht 10 aufbaut. Über eine Leitung 17 gelangt der zu regenerierende Feststoff in die Schächte 5. Der Feststoff gelangt darauf über die Fließbetten 9 in die die Schächte 5 umgebende Sandwirbelschicht 10. Der getrocknete Feststoff gelangt aus der Kammer 21 über die Abgasleitung 20 in einen Feststoffabscheider 11. Das feststoffreie Abgas wird über die Gasleitung 12 abgeführt. Der Feststoff fließt aus dem Regeneratauslaß 19 aus.

Bei vorstehend beschriebener Ausgestaltung werden die Fließbetten 9 parallel betrieben. Demgegenüber zeigt der in der Fig. 3 abgebildete Wirbelschichtreaktor 1 einen Betrieb in Reihenschaltung. Anstelle nur eines Feststoffabscheiders 11 sind vier Feststoffabscheider 11a-d vorgesehen, so daß der Feststoff die Wirbelschicht 10 mehrfach durchläuft, bevor er aus dem Regeneratauslaß 19 aus dem System ausgeschleust wird. Zu diesem Zweck ist die Wirbelkammer 21 in vier Teilwirbelkammern 21a, b, c und d unterteilt, was durch drei Tauchwehre 18 bewirkt wird, die die einzelnen Teilkammern bis auf einen Restspalt $z_2$ oberhalb des Anströmbodens 3 gegeneinander abschotten. Aus diese Weise entstehen mehrere Teilwirbelschichten 10a, b, c und d. Jedes System bildet einen eigenen Kreislauf für den Feststoff. Dieser gelangt zunächst über die Leitung 17 in die Teilwirbelschicht 10a. Über die Gasleitung 20a für das feststoffhaltige Abgas gelangt dieses in einen Feststoffabscheider 11a, dessen Feststoffauslaß 13a eine weitere Teilwirbelkammer 10b beschickt. Das Abgas daraus gelangt über die Leitung 20b in den Feststoffabscheider 11b, dessen Feststoffauslaß seinerseits in die Teilwirbelkammer 10c austrägt. Deren Abgas wird über die Gasleitung 20c dem Feststoffabscheider 11c aufgegeben, der die in diesem Beispiel letzte Teilwirbelkammer 10d beschickt. Das Abgas daraus gelangt über die Leitung 20d in den im Beispiel letzten Feststoffabscheider 11d, der das nunmehr fertig wiederaufbereitete Regenerat über den Auslaß 19 austrägt. Das feststoffreie Abgas aus den einzelnen Feststoffabscheidern 11a bis d wird über die gemeinsame Gasleitung 12 abgeführt und kann gegebenenfalls in einem abschließenden Zyklonabscheider 11e vom verbliebenen feinstkörnigen Feststoff abgetrennt werden, der über Leitung 19a mit dem Feststoff aus der Leitung 19 zusammengeführt wird. Das Abgas wird über Leitung 12a abgeführt.

### Beispiel

Für das erfindungsgemäße Verfahren bzw. die erfindungsgemäße Vorrichtung wurde ein als Wirbelrinne ausgebildeter Wirbelschichtofen 1 (WSO) mit einer Anströmfläche von 0,16 m² bei einem Seitenverhältnis von 4 : 1 verwendet.

Quer zur Längsachse des Wirbelschichtofens 1 in gleichem Abstand von beiden Stirnseiten des WSO war ein steckbares Einbausystem gemäß Fig. 1 angebracht.

Rechtwinklig zur Längsachse des Wirbelschichtofens 1 war ein im Querschnitt rautenförmiges Leitsegment 2 eingesetzt, dessen untere Kante Z = 50 mm vom Anströmboden 3 (Roststabboden) entfernt war. Das Leitsegment 2 hatte eine Breite c von 150 mm.

Rechtwinklig zur Längsachse des WSO 1 waren oberhalb des Leitsegments 2 zwei nach oben symmetrisch konisch angestellte, einen Schacht 5 bildende Trennwände 4 angeordnet. Die Trennwände hatten eine Länge H von 300 mm. Der durch sie gebildete Schachteintritt b war 100 mm und der Schachtaustritt B war 120 mm breit. Schachtaustritt B und Leitsegment 2 bildeten einen Spalt a von 30 mm.

Parallel zu den seitlichen Längskanten des Leitsegmentes 2 waren Gasleitbleche 6 angebracht.

Die Gasleitbleche 6 waren 50 mm hoch und so angeordnet, daß sie zur Horizontalen einen Winkel γ von 45° bildeten. Ihre unteren Kanten waren im Abstand $X_1$, $X_2$ von 20 mm vom Leitsegment angeordnet. Der Mittelpunkt der Aufgabestelle 7 für den zu regenerierenden pulverförmigen Feststoff befand sich auch den Mittelsenkrechten 8 des Schachtes 5 und zwar 200 mm unterhalb der Ebene des Schachteintritts b.

Der WSO 1 war mit Sand der Körnung 1-2 mm ca. 400 mm hoch (im Ruhezustand) gefüllt. Als Wirbelgas wurde ein Gemisch aus stöchiometrisch verbranntem Erdgas und Wasserdampf mit einer Temperatur von 1 010°C und einem Mengenstrom von ca. 180 Nm³/H verwendet. Nach Durchströmung des des durchweg gleichmäßig gasdurchlässigen Anströmbodens 3 wurde der Sand zu beiden Seiten des Schachtes 5 gleichmäßig fluidisiert, wobei ständig Sand aus der sprudelnden Wirbelschichtoberfläche in die Eintrittsöffnung b des Schachtes 5 gelangte. Hierin wanderte der Sand langsam bis zur Schachtaustrittsöffnung B mit einer mittleren Geschwindigkeit von ca. 100 mm/min abwärts und trat an beiden Seiten des Leitsegmentes 2 gleichmäßig durch die Spalte a zwischen den Gasleitblechen 6 und dem Leitsegment 2 wieder in die Wirbelschicht ein. Durch Veränderung der Wirbelgasmenge konnte auch die Wandergeschwindigkeit des im Schacht 5 abwärts fließenden Sandes dadurch beeinflußt werden, daß mit zunehmender Wirbelgasmenge um z. B. 10 m³/h auch die Fließgeschwindigkeit des Sandes um ca. 10 mm/min erhöht werden konnte.

In einem maßstäblichen, gleichgroßen transparenten Kaltmodell des WSO konnte beobachtet werden, daß die Gasleitbleche 6 eine im Kanal aufwärts gerichtete Gasströmung so stark herabsetzten, daß eine allmähliche Aufwärtswanderung von pulverförmigen Feststoffteilchen durch das Zwischenkornvolumen des Sandes nicht stattfand. Gleichzeitig wurde beobachtet, daß durch die Konstruktion des Leitsegmentes 2 und den durchgehend gasdurchlässig gestalteten Anströmboden 3 an den seitlichen Kanten des Leitelementes 2 ein lokal verstärkter Wirbelzustand eine zügige Aufnahme des aus der Fließbettzone austretenden Sandes in die den Schacht 5 umgebende Sandwirbelschicht wesentlich begünstigte.

Der zu regenerierende Feststoff war ein Gemisch aus in gleichen Mengen bestehenden getrocknetem Überschußschlamm und pulverförmiger Aktivkohle.

Die Trocknung dieses 25 % Trockensubstanz enthaltenden Schlamms erfolgte zuvor in einer mit Sand betriebenen Wirbelschicht. Nach der Trocknung hatte das Gemisch noch eine Restfeuchte von < 1,5 Gew.-% und eine Körnung von 90 % < 60 μm bei einem mittleren Schüttgewicht von ca. 600 g/l.

Mit Hilfe einer Dosiervorrichtung wurde die Trockensubstanz in den Regenerationsofen gefördert. Die Dosiereinrichtung bestand aus einer Dosier- und einer Förderschnecke, wobei die erstere gasdicht über dem Einlauftrog der wassergekühlten Förderschnecke montiert war.

Nach Einschalten der Dosiereinrichtung gelangte der pulverförmige Feststoff in die Fließbettzone und wurde mit dem abwärts fließenden Sand in die Sandwirbelschicht gefördert und im Wirbelgasstrom durch diese hindurchgefördert. Aus dem Abgasstrom wurde der nunmehr regenerierte Feststoff mittels eines Zyklonabscheiders zu ca. 92 % abgeschieden.

Da die Vorlage des Zyklonabscheiders aus einem Glasbehälter bestand, konnte die Verweilzeit des Feststoffes vom Einschaltbeginn der Dosiereinrichtung bis zum Erscheinen der ersten Staubpartikel in der Zyklonvorlage genau ermittelt werden. So wurde bei einem Durchsatz von 15 kg Trockensubstanz /h eine Verweilzeit von 8,5 min gemessen. Da der Zyklon einen Rohrleitungsabstand vom Gasaustritt des WSO 1 von nur ca. 1,5 m mißt, beträgt die tatsächliche Feststoffverweilzeit innerhalb der Sandschicht des WSO 1 nur max. 2 Sekunden weniger und ist damit vernachlässigbar.

1 Wirbelschichtreaktor
2 Leitsegment
3 Anströmboden
4 Trennwand
5 Schacht
6 Gasleitblech
7 Aufgabeeinrichtung
8 Einbausystem (bestehend aus 2, 4, 6)
b Schachteintritt
B Schachtaustritt
H Schachthöhe
a Spaltbreite
c Leitsegmentbreite
$x_1$ Abstandsmaß Gasleitblech
$x_2$ Abstandsmaß Gasleitblech
A Länge Gasleitblech
D Abstandsmaß Aufgabestelle
9 Fleißbett
10 Sandwirbelschicht (Teilwirbelschichten 10a-d)
11 Feststoffabscheider (11a-e)
12, 12a Gasleitung für feststofffreies Abgas
13 Feststoffauslaß (13a-d)
14 Gasverteilungskammer
16 Wirbelgasleitung
$Z_1$ Abstandsmaß Leitsegment
$Z_2$ Abstandsmaß Tauchwehr
17 Leitung für zu regenerierenden Feststoff
18 Tauchwehr
19, 19a Regeneratauslaß
20 Gasleitung für feststoffhaltiges Abgas (20a-d)
21 Wirbelkammer (21a-d)
22 Zweigleitung
α 60°
β 120°
γ 45°

**Patentansprüche**

1. Vorrichtung zum thermischen Regenerieren von trockenen, pulverförmigen, beladenen, kohlenstoffhaltigen Adsorptionsmitteln, bestehend aus einem mit Quarzsand einer Körnung von 1 bis 2 mm betriebenen Wirbelschichtreaktor mit Rechteckquerschnitt, einer Festbetthöhe von 40 bis 80 cm und Aufgabe- und Abzugseinrichtungen für das zu regenerierende Material im Gasraum über dem Wirbelbett, wobei der Wirbelschichtreaktor ein Verhältnis der Länge zur Breite größer als 2, vorzugsweise 4, aufweist, dadurch gekennzeichnet, daß

a) der Wirbelschichtreaktor (1) mit mehr als 1, vorzugsweise bis zu 8, quer zur Wirbelschichtreaktorlängsrichtung eingesetzten Einbausystemen (8) in gleichmäßigen Abständen voneinander innerhalb der Wirbelschicht versehen ist und die Einbausysteme (8) aus

b) einem rechtwinklig zur Längsachse des Wirbelschichtreaktors (1) angeordneten, im Abstand $(z_1)$ vom Anströmboden (3) eingesetzten Leitsegment (2), das den Querschnitt eines Rhombus aufweist, dessen Winkel $\alpha$ kleiner ist als der Winkel $\beta$, bestehen,

c) zwei rechtwinklig zur Längsachse des Wirbelschichtreaktors (1) und symmetrisch oberhalb des Leitsegments (2) angeordneten, nach oben konisch angestellte Trennwände (4) umfassen, die mit dem Leitsegment (2) einen Spalt (a) sowie einen im Oberflächenbereich der Wirbelschicht endenden Schacht (5) bilden und

d) zwei Wirbelgasleitbleche (6) aufweisen, die in einem Winkel $(\gamma)$ zur Horizontalen in einem Abstand $(x_1)$ von der benachbarten Fläche des Leitsegments (2) und in einem Abstand $(x_2)$ parallel zu den Längskanten des Leitsegments (2) angeordnet sind.

2. Vorrichtung nach Anspruch 1, dadurch gekennzeichnet, daß das Leitsegment (2) einen Basiswinkel $(\beta)$ von 100° bis 140° besitzt.

3. Vorrichtung nach Anspruch 1 und 2 dadurch gekennzeichnet, daß zwischen den Einbausystemen (8) von der Decke bis auf einen Abstand $(z_2)$ vom Anströmboden hinabreichende Trennwände (18) angeordnet sind.

4. Vorrichtung nach Anspruch 1 bis 3, dadurch gekennzeichnet, daß jedes Einbausystem (8) einen eigenen Abgasauslaß (20a bis d) und eine eigene Abscheideeinrichtung (11a bis d) besitzt.

5. Verfahren zum thermischen Regenerieren von trockenen, pulverförmigen, beladenen, kohlenstoffhaltigen Adsorptionsmitteln, bei dem

a) das zu behandelnde Adsorptionsmittel nach oben durch eine Wirbelschicht geführt und oberhalb der Wirbelschicht mit dem Wirbelgas abgeführt, sowie in einem nachgeschalteten Feststoffabscheider vom Wirbelgas getrennt wird, dadurch gekennzeichnet, daß

b) ein Wirbelschichtreaktor (1) mit mehr als 1, vorzugsweise bis zu 8, quer zur Wirbelschichtreaktorlängsrichtung eingesetzten wie folgt spezifizierten Einbausystemen (8) in gleichmäßigen Abständen voneinander innerhalb der Wirbelschicht, vorgesehen ist, wobei,

c) das zu regenerierende, pulverförmige, trockene Adsorptionsmittel über eine oder mehrere Aufgabeeinrichtungen (7) in ein Fließbett (9) gelangt, das durch von nach oben konisch angestellten Trennwänden (4) in Form eines Schachtes (5), begrenzt wird,

d) im Schacht (5) auf eine Temperatur zwischen 700 und 950 °C aufgeheizt wird und

e) durch einen Spalt (a) zwischen Trennwand (4) und Leitsegment (2), das den Querschnitt eines Rhombus aufweist, dessen Winkel $\alpha$ kleiner als der Winkel $\beta$ ist und im Abstand $(z_1)$ vom Anströmboden (3) rechtwinklig zur Längsachse des Wirbelschichtreaktors (1) angeordnet ist, in das Sandwirbelbett (10) eingeführt wird, wobei zwei Wirbelgasleitbleche (6) in einem Winkel $\gamma$ zur Horizontalen in einem Abstand $(x_1)$ von der benachbarten Fläche des Leitsegments (2) und einem Abstand $(x_2)$ parallel zu den Längskanten des Leitsegments (2) angeordnet sind, von wo das regenerierte Adsorptionsmittel nach oben in einen Gassammelraum mit dem Abgas ausgetragen wird, worauf es aus dem Abgasstrom abgeschieden wird.

6. Verfahren nach Anspruch 5, dadurch gekennzeichnet, daß das Wirbelgas sauerstofffrei ist und einen Wasserdampfgehalt von über 20 Vol.-%, vorzugsweise von 25-30 Vol.-% besitzt.

7. Verfahren nach Anspruch 5 und 6, dadurch gekennzeichnet, daß die Verweilzeit des zu regenerierenden Adsorptionsmittels im Wirbelschichtreaktor (1) je Einbausystem (8) zwischen 1 und 10 Minuten beträgt.

8. Verfahren nach Anspruch 5 bis 7, dadurch gekennzeichnet, daß die Regenerierung in mehreren Einbausystemen (8) in einer gemeinsamen Wirbelschicht (10) aus Quarzsand mit einem gemeinsamen Abgasauslaß und einer einzigen Feststoffabscheideeinrichtung (11) im Abgasstrom erfolgt.

9. Verfahren nach Anspruch 8, dadurch gekennzeichnet, daß das abgeschiedene Adsorptionsmittel dem jeweils nachgeschalteten Einbausystem (8) in die Teilwirbelschichten (10a-d) wieder aufgegeben wird.

10. Verfahren nach Anspruch 8 und 9, gekennzeichnet durch eine Kombination der Parallel- und Hintereinanderschaltung der Einbausysteme (8) im Wirbelschichtreaktor (1).

**Claims**

1. System for thermal regeneration of dry, pulverous, loaded, carbonaceous adsorbents consisting of a fluidised bed having a rectangular cross-section operated with quartz sand of a particle size range between 1 and 2 mm, with a fixed bed height of 40 to 80 cm, and feeding and withdrawal means for the material to be regenerated in the gas space above the fluidised bed, the fluidised bed reactor having a length to whidth ratio greater than 2, preferably 4, characterized in that

a) the fluidised bed reactor (1) is provided with more then 1, preferably up to 8 insert build-in systems (8) transverse to the fluidised bed reactor longitudinal direction, arranged at equal distances form of each other within the fluidised bed, and that the built-in systems (8) consist of

b) a guide segment (2) disposed perpendicularly to the longitudinal axis of the fluidised bed reactor (1) at a distance ($z_1$) form the afflux base plate (3), the cross section of which being a rhombus whose angle $\alpha$ is smaller than the angle $\beta$.

c) two separating walls (4) disposed perpendicularly to the longitudinal axis of the fluidised bed reactor (1) and symmetrically above the guide segment (2), conically inclined upwards, and forming, together with the guide segment (2), a gap (a) as well as a shaft (5) ending in the zone of the fluidised bed surface, and

d) two fluidising gas baffles (6) disposed at an angle ($\gamma$) relative to the horizontal plane at a distance ($x_2$) from the adjacent surface of the guide segment (2), and at a distance ($x_2$) parallel to the longitudinal edges of the guide segment (2).

2. System according to claim 1, characterized in that the guide segment (2) has a basis angle ($\beta$) of 100° to 140°.

3. System according to claims 1 and 2, characterized in that, between the built-in systems (8), separating walls (18) are provided extending from the top wall down to a distance ($z_2$) from the afflux base plate.

4. System according to claims 1 to 3, characterized in that each built-in system (8) possesses a own flue gas outlet (20a to d) and a own separating means (11a to d).

5. Process for thermal regeneration of dry, pulverous, loaded, carbonaceous adsorbents wherein

a) the adsorbent to be retated is led upwards through a fluidised bed, withdrawn above the fluidised bed together with the fluidising gas, and separated from the fluidising gas in a downstream solids separator, characterized in that

b) a fluidised bed reactor (1) is provided with more than 1, preferably up to 8 insert build-in systems (8) specified as follows, transverse to the longitudinal direction of the fluidised bed reactor, and arranged at equal distances from each other within the fluidised bed, whereby

c) the pulverous, dry adsorbent is delivered via one or more feeding means (7) into a fluidised bed (9) which is limited by separating walls (4) conically inclined upwards in form of a shaft (5),

d) is heated in the shaft (5) to a temperature ranging between 700 and 950 °C , and

e) is introduced into the sand fluidised bed (10), via a gap (a) between the separating wall (4) and guide segment (2), the cross section of the guide segment being a rhombus whose angle $\alpha$ is smaller than the angle $\beta$, and which is disposed at a distance ($z_1$) from the afflux base plate (3) perpendicularly to the longitudinal axis of the fluidised bed reactor (1) whereby two fluidising gas baffles (6) are disposed at an angle $\gamma$ relative to the horizontal plane at a distance ($x_1$) from the adjacent surface of the guide segment (2) and at a distance ($x_2$) parallel to the longitudinal edges of the guide segment (2), from where the regenerated adsorbent is delivered with the flue gas upwards into a gas collecting space, and subsequently removed from the gas stream.

6. Process according to claim 5, characterized in that the fluidising gas in oxygen-free and has a water vapour content of more than 20 % by volume, preferably 25 to 30 % by volume.

7. Process according to claims 5 and 6, characterized in that the residence time of the adsorbent to be regenerated in the fluidised bed reactor (1) ranges between 1 and 10 minutes according to the built-in insert system (8).

8. Process according to claims 5 to 7, characterized in that regeneration is obtained in several build-in systems (8) and in a common fluidised bed (10) consisting of quartz sand, a common flue gas outlet and a single solids separating means (11) in the flue gas stream.

9. Process according to claim 8, characterized in that the separated adsorbent is recycled in the fluidised bed compartments (10a to d) to the downstream build-in system (8).

10. Process according to claims 8 and 9, characterized by a combination of parallel and series connection of the build-in systems (8) in the fluidised bed reactor (1).

**Revendications**

1. Installation pour la régénération thermique d'agents adsorbants contenant du carbone, chargés, pulvérulents, secs, qui se compose d'un réacteur à lit turbulent ou fluidisé travaillant avec du sable de quartz d'un calibre des grains de 1 à 2 mm, de section rectangulaire, d'une hauteur de lit fixe de 40 à 80 cm et de dispositifs d'amenée et d'évacuation pour le matériau à régénérer dans l'enceinte ou l'espace de gaz au-dessus du lit fluidisé ou turbulent, où le réacteur à lit fluidisé ou turbulent présente un rapport de la longueur à la largeur supérieur à 2, de préférence 4, caractérisé en ce que

a) le réacteur à couche fluidisée ou turbulente (1) est équipé de plus d'un, de préférence jusqu'à 8, systèmes formant chicane (8) disposés transversalement par rapport à la direction longitudinale du système à couche fluidisée ou turbulente, à des distances égales les uns des autres dans la couche turbulente ou fluidisée et les systèmes formant chicane (8) se composent de :

b) un segment déflecteur (2) agencé à angle droit par rapport à l'axe longitudinal du réacteur à couche fluidisée ou turbulente (1), disposé à une distance ($z_1$) du fond d'insufflation (3) et qui présente la section transversale d'un losange dont l'angle $\alpha$ est plus petit que l'angle $\beta$,

c) deux parois séparatrices (4) se rapprochant coniquement vers le haut, disposées à angle droit par rapport à l'axe longitudinal du réacteur à couche turbulente ou fluidisée (1) et de manière symétrique au-dessus du segment déflecteur (2), qui forment avec le segment déflecteur (2) une fente (a) comme aussi une cheminée (5) dans la zone superficielle de la couche turbulente ou fluidisée

d) deux déflecteurs (6) de gaz turbulent ou fluidisé, qui sont disposés selon un angle (γ) par rapport à l'horizontale, à une distance ($X_1$) de la surface voisine du segment déflecteur (2) et à distance ($X_2$) parallèle au côté longitudinal du segment déflecteur (2).

2. Installation suivant la revendication 1, caractérisée en ce que le segment déflecteur (2) possède un angle de base (β) de 100° à 140°.

3. Installation suivant les revendications 1 et 2, caractérisée en ce qu'entre les systèmes formant chicane (8) des parois séparatrices (18) descendent depuis la paroi de couverture jusqu'à une distance ($Z_2$) du fond d'insufflation.

4. Installation suivant les revendications 1 à 3, caractérisée en ce que chaque système formant chicane (8) possède une sortie de gaz résiduaire propre (20a à d) et un dispositif séparateur propre (11a à d).

5. Procédé de régénération thermique d'agents adsorbants contenant du carbone, chargés, pulvérulents, secs, conformément auquel

a) on entraîne l'agent adsorbant à traiter vers le haut à travers une couche turbulente ou fluidisée et on l'évacue au-dessus de la couche turbulente ou fluidisée avec le gaz de turbulence ou fluidisation et on le sépare du gaz de turbulence ou fluidisation dans un séparateur de corps solides raccordé en série,
caractérisé en ce que

b) un réacteur à couche turbulente ou fluidisée (1) est équipé de plus d'un, de préférence jusqu'à 8, systèmes formant chicane (8) disposés transversalement par rapport à la direction longitudinale du réacteur à couche turbulente ou fluidisée et définis comme suit, à des distances égales les uns des autres dans la couche turbulente ou fluidisée, si bien que

c) l'agent adsorbant à régénérer, pulvérulent, sec, parvient par l'intermédiaire d'un ou plusieurs dispositifs d'introduction (7) dans un lit mobile (9) qui est limité sous la forme d'une cheminée (5) par des parois séparatrices (4) disposées de manière conique vers le haut,

d) on chauffe l'agent adsorbant en question jusqu'à une température variant de 700 à 950 °C dans la cheminée (5) et

e) on l'introduit dans le lit à sable turbulent ou fluidisé (10) par une fente (a) entre la paroi séparatrice (4) et le segment déflecteur (2) qui présente la section transversale d'un losange dont l'angle α est plus petit que l'angle β et est disposé à une distance ($z_1$) du fond d'insufflation (3) à angle droit par rapport à l'axe longitudinal du réacteur à couche turbulente ou fluidisée (1), où deux déflecteurs (6) de gaz turbulent ou fluidisé sont disposés selon un angle γ par rapport à l'horizontale à une distance ($x_1$) de la surface voisine du segment déflecteur (2) à une distance ($x_2$) parallèlement aux côtés longitudinaux du segment déflecteur (2) d'où l'agent adsorbant régénéré est évacué vers le haut dans un espace collecteur de gaz avec le gaz résiduaire, puis on sépare l'agent adsorbant régénéré du courant de gaz résiduaire.

6. Procédé suivant la revendication 5, caractérisé en ce que le gaz de turbulence ou fluidisation est exempt d'oxygène et possède une teneur en vapeur d'eau supérieure à 20 % en volume, de préférence de 25 à 30 % en volume.

7. Procédé suivant les revendications 5 et 6, caractérisé en ce que la durée de séjour de l'agent adsorbant à régénérer dans le réacteur à couche turbulente ou fluidisée (1) varie de 1 à 10 minutes dans chaque système formant chicane (8).

8. Procédé suivant les revendications 5 à 7, caractérisé en ce que la régénération s'entreprend dans plusieurs systèmes formant chicane (8) dans une couche turbulente ou fluidisée commune (10) constituée de sable de quartz avec une sortie de gaz résiduaire commune et un seul dispositif de séparation de corps solides (11) dans le courant de gaz résiduaire.

9. Procédé suivant la revendication 8, caractérisé en ce que l'on réintroduit l'agent adsorbant séparé dans le système formant chicane (8) disposé chaque fois en aval dans les couches turbulentes ou fluidisées partielles (10a-d).

10. Procédé suivant les revendications 8 et 9, caractérisé par une combinaison du raccordement en parallèle et en série des systèmes formant chicane (8) dans la réacteur à couche turbulente ou fluidisée (1).

FIG.1

FIG. 2

FIG.3